# FASCICULE DE BREVET EUROPEEN

(11) **EP 3 375 153 B1**
(45) Date de publication et mention de la délivrance du brevet: **27.11.2019**
(21) Numéro de dépôt: 16809936.4
(22) Date de dépôt: 26.10.2016
(51) Int. Cl.: H04L 12/18, H04L 29/06, H04W 4/16, H04W 64/00, H04W 76/00, H04M 3/56

(54) **PROCÉDÉ ET DISPOSITIF DE GESTION D'UNE PRISE DE PAROLE DEPUIS UN TERMINAL MOBILE, SERVEUR, TERMINAL, PROGRAMME D'ORDINATEUR ET SUPPORT D'ENREGISTREMENT CORRESPONDANTS**
VERFAHREN UND VORRICHTUNG ZUR VERWALTUNG DER SPRECHREIHENFOLGE AUS EINEM MOBILEN ENDGERÄT, SOWIE ENTSPRECHENDE SERVER, ENDGERÄT, COMPUTERPROGRAMM UND SPEICHERMEDIUM
METHOD AND DEVICE FOR MANAGING SPEAKING TURNS FROM A MOBILE TERMINAL, CORRESPONDING SERVER AND TERMINAL, COMPUTER PROGRAM AND STORAGE MEDIUM

(30) Priorité: 09.11.2015 FR 1560719
(43) Date de publication de la demande: 19.09.2018
(73) Titulaire: Orange, 75015 Paris (FR)
(72) Inventeur: MONCOMBLE, Ghislain, 22310 Plestin Les Greves (FR)
(86) Numéro de dépôt international: PCT/FR2016/052786
(87) Numéro de publication internationale: WO 2017/081385

(56) Documents cités:
- EP-A1- 1 638 249
- US-A1- 2012 268 553
- US-A1- 2015 078 295
- US-A1- 2015 079 959

## Description

### Domaine technique

La présente invention se rapporte au domaine des télécommunications et porte plus particulièrement sur un procédé de prise de parole, par exemple dans une assemblée à partir d'un terminal mobile personnel. Elle concerne également un dispositif de gestion de prise de parole, un serveur, un terminal, un programme d'ordinateur et un support d'enregistrement.

### Art antérieur

A l'occasion d'une conférence ou d'une quelconque assemblée à laquelle assiste un ensemble de participants, il est fréquent de donner la parole à des personnes de l'assistance afin qu'elles puissent réagir et poser des questions en relation avec ce qui a été présenté. De manière classique, un participant souhaitant prendre la parole se signale en levant la main et se fait porter un microphone sans fil. À la fin de son intervention, le participant restitue le microphone qui peut être porté à un autre participant. Un tel microphone est généralement relié à un système de sonorisation de la salle de conférence de façon à ce que l'assemblée puisse profiter de l'intervention.

Ce mode de fonctionnement présente des inconvénients. En particulier, le temps d'acheminement du microphone vers un participant qui souhaite prendre la parole occasionne une perte de temps. D'autre part, ce système pose des problèmes d'intendance car les microphones doivent être maintenus en état de fonctionnement et en nombre suffisant.

La demande de brevet US 2015/0079959 A1 propose une alternative intéressante à ce mode de fonctionnement. Ce document décrit un procédé autorisant les personnes de l'assistance à demander et prendre la parole par l'intermédiaire de leur terminal mobile personnel, comme par exemple à partir d'un smartphone. Pour cela, la procédé selon cette demande permet à une personne de signaler son intention de prendre la parole par l'intermédiaire d'une interface dédiée accessible depuis son terminal. Il s'agit par exemple d'un site Web accessible depuis le smartphone sur lequel l'utilisateur s'enregistre avec son numéro de téléphone. Lorsqu'un utilisateur signale son intention de prendre la parole, un message est affiché sur une console du conférencier (par exemple un ordinateur). Ce dernier peut ainsi visualiser les différentes demandes de prise de parole et déclencher un appel vocal vers le terminal à l'origine de l'une ou l'autre de ces demandes. Lorsque la communication est établie, la communication vocale est redirigée vers le système de sonorisation de la salle. Les personnes de l'assemblée peuvent ainsi prendre la parole sans qu'il soit nécessaire d'acheminer des microphones. Le procédé selon cette demande présente en outre l'avantage de permettre à des personnes suivant la conférence à distance, par exemple par l'intermédiaire d'une retransmission sur un site web, de solliciter une intervention et de prendre la parole à distance.

Malgré les avantages indéniables du procédé décrit dans la demande US 2015/0079959 A1, celui-ci présente des inconvénients pour lesquels aucune solution satisfaisante n'est proposée.

En particulier, l'utilisation de numéros d'appel téléphoniques n'est pas adapté. En effet, lors de conférences internationales, l'assemblée est souvent constituée de ressortissants de différents états. L'établissement de communications téléphoniques pour prendre la parole peut alors occasionner des frais de téléphonie importants à la fois pour les organisateurs de la conférence et pour les participants. Pour contourner cet inconvénient, il vient naturellement à l'idée de mettre en place un système de communication basée sur des technologies de voix sur IP (Internet Protocol). Ainsi, un système de communication accessible par l'intermédiaire d'un point d'accès Wifi permet par exemple de mettre en œuvre le procédé discuté ci-avant sans qu'il soit nécessaire d'établir une communication téléphonique. Il est ainsi possible de réduire les frais tant pour les organisateurs de la conférence que pour les participants prenant la parole.

Toutefois, cette mise en œuvre particulière fait naître d'autres inconvénients.

En particulier, pour accéder à un service de communication sur IP gratuitement, les participants doivent configurer leur terminal de façon à utiliser le point d'accès Wifi de la salle de conférence. Par l'intermédiaire de ce point d'accès, les utilisateurs peuvent accéder au réseau Internet, s'inscrire sur le site Web associé à la conférence, demander et prendre la parole par l'intermédiaire d'une application de Voix sur IP par exemple. Ainsi, le point d'accès Wifi de la salle de conférence peut être utilisé par l'assistance à la fois pour accéder à divers documents en ligne mais aussi prendre la parole. Dans certains cas, selon le nombre de participants, ces différents accès à Internet peuvent occasionner des congestions et dégrader la qualité audio des prises de parole.

L'utilisation d'un terminal mobile personnel pour prendre la parole dans une conférence selon cet état de la technique présente d'autres inconvénients.

Par exemple, lorsqu'un utilisateur souhaite prendre la parole, il signale son intention par l'envoi d'une demande de prise de parole qui s'affiche sur un terminal du conférencier. Or, il peut s'écouler un certain temps entre le moment de réception de la demande de prise de parole et le moment où le participant peut effectivement prendre la parole. Par exemple, d'autres participants peuvent intervenir avant lui, ou bien le conférencier peut vouloir terminer son exposé avant d'accepter l'intervention. Ainsi, au moment où le participant peut effectivement prendre la parole, le thème de l'intervention peut ne plus être en rapport avec l'exposé.

D'autre part, lorsqu'on utilise un microphone sans fil traditionnel, il est facile de suivre le cheminement du microphone dans l'assemblée pour déterminer la personne qui prend la parole. Au contraire, lorsqu'un participant prend la parole à partir de son terminal mobile personnel, il est plus difficile de le localiser.

Le document US 2015/078295 A1 montre un proxy WebRTC dans un équipement utilisateur, agissant pour le compte d'une application client WebRTC multimedia dont il reçoit un flux, qu'il démultiplexe et envoie à un second proxy WebRTC d'un second équipement utilisateur.

Il existe donc un besoin pour une solution de gestion d'une prise de parole lors d'une prise de parole dans une assemblée à partir d'un terminal personnel, qui permette de fluidifier et de garantir la qualité de telles interventions.

### Résumé de l'invention

A cet effet, l'invention concerne un procédé de gestion d'une prise de parole, entre un premier terminal mobile et un second terminal, selon la revendication 1, les premiers et seconds terminaux étant inclus dans un ensemble de terminaux interconnectés au travers d'un premier réseau de communication.

Le procédé est remarquable en ce qu'il comporte, suite à la réception et à la validation sur le second terminal d'une demande de mise en relation émise par le premier terminal, des étapes de :
- configuration pour chacun des terminaux de l'ensemble exceptés les premiers et seconds terminaux, d'une première restriction de communication pour les connexions empruntant le premier réseau de communication et,
- d'établissement d'une communication entre le premier et le second terminal. A la détection de la fin de la communication, le procédé comporte en outre une étape de suppression de la restriction de communication pour l'ensemble des terminaux.

Un principe général repose sur l'insertion dans un réseau local d'un système de commande adapté pour limiter l'accès à des services en ligne de certains terminaux connectés au réseau local et privilégier un terminal mobile particulier. On entend par restriction de communication une limite imposée à un terminal lorsqu'il accède à des services en ligne. Il peut s'agir par exemple d'une limite de débit, d'une interdiction d'accès, d'une redirection vers un service alternatif ou encore par exemple d'une temporisation de l'accès. La restriction peut être associée à l'utilisation d'un ou plusieurs réseaux ou services particulier.

On entend par demande de mise en relation, un message envoyé par un terminal lorsque son utilisateur souhaite prendre la parole lors d'une conférence par exemple. Un tel message dans la présente invention joue le rôle d'une main levée dans une assemblée classique.

L'invention peut être mise en œuvre dans une salle de conférence ou de spectacle, ou plus généralement un lieu approprié pour accueillir une assemblée, dans laquelle des participants peuvent prendre la parole et intervenir au moyen de leur terminal mobile. L'invention s'applique particulièrement lorsque les prises de paroles sont effectuées depuis un terminal mobile adapté pour communiquer selon un protocole de Voix sur IP (VoIP) au travers d'un réseau de communication local de la salle.

Ainsi, lorsqu'un participant prend la parole, une communication VoIP est établie sur un réseau local de la salle, entre le terminal du participant et un terminal du conférencier relié au système de sonorisation de la salle.

Lorsque ce même réseau sans fil est utilisé simultanément par d'autres participants à la conférence pour accéder à des services en ligne, la qualité de la communication VoIP peut être fortement dégradée par des congestions et autres perturbations du trafic réseau.

Grâce à l'invention, lorsqu'un participant demande à prendre la parole, une limite de débit est imposée aux autres terminaux de l'assemblée pour leurs accès à des services en ligne. Ainsi, lorsque la communication est établie entre le terminal du participant et le terminal du conférencier, il est possible de garantir un débit minimum pour la communication. La qualité de la communication est ainsi garantie. La limite de débit imposée aux terminaux peut par exemple être calculée en fonction de la bande passante nécessaire pour établir une communication entre le terminal utilisé pour prendre la parole et le terminal du conférencier ou selon que la communication demandée met ou non en œuvre des médias audio et/ou vidéo.

À la fin de la communication, la restriction de communication est levée.

Selon une réalisation particulière, le procédé est tel qu'il comporte en outre une étape de configuration, pour chacun des terminaux de l'ensemble exceptés les premiers et seconds terminaux, d'une seconde restriction de communication appliquée aux connexions établies vers des services disponibles sur un second réseau accessible via un équipement d'accès connecté au premier réseau.

Il arrive souvent que le premier réseau permettant d'interconnecter les terminaux, par exemple le réseau local d'une salle de spectacle, offre la possibilité d'accéder à un second réseau par l'intermédiaire d'une passerelle telle qu'un modem ADSL par exemple. Ces deux réseaux disposent généralement de caractéristiques techniques différentes. La passerelle peut en outre constituer un goulot d'étranglement. Afin d'éviter la congestion au niveau de la passerelle et de garantir une bonne qualité de service lors d'une intervention, tout en permettant l'accès à des ressources du réseau local, une restriction de communication différente est imposée pour les accès visant le premier et le second réseau de communication.

Ainsi, il est possible de fixer par exemple un premier débit maximum pour les connexions vers des services disponibles sur le premier réseau et un second débit maximum pour l'accès à des services disponibles sur le second réseau.

Selon un mode de réalisation particulier, le procédé est tel qu'il comporte en outre, à la réception d'une demande de mise en relation en provenance du premier terminal, une étape d'association de la demande avec un élément affiché sur un dispositif de présentation.

Lorsqu'une demande de mise en relation et reçue par le terminal du conférencier, celle-ci peut être mise en relation avec un document projeté sur un écran de la salle. Par exemple, à la réception d'une telle demande, le procédé peut mémoriser des informations de contexte relatives à la présentation du conférencier, comme un document et une page en cours d'affichage sur un vidéo projecteur. Ainsi, il est possible d'afficher automatiquement sur l'écran du conférencier la demande de prise de parole en relation avec le thème probable de cette prise de parole ou une question posée.

Selon un mode particulier de réalisation, le procédé est tel que la demande de mise en relation comprend au moins une donnée de localisation du premier terminal .

La demande de mise en relation peut ainsi comprendre une information de localisation du participant, de façon à permettre au conférencier de localiser facilement un participant dans la salle quand il lui accorde un temps de parole. L'information de localisation peut correspondre par exemple à un numéro de siège dans une salle, une information de géolocalisation à l'intérieur d'un bâtiment ou encore une position géographique de type coordonnées GPS lorsque le participant n'est pas présent dans la salle et qu'il suit par exemple la conférence depuis son domicile. Lorsque la demande est émise par un participant présent dans la salle, cette information de localisation peut être utilisée par exemple pour diriger un spot ou une caméra vers ce participant.

Selon un mode de réalisation particulier, le procédé est tel que la demande de mise en relation comprend au moins un motif de la demande .

La demande de mise en relation comprend le motif de l'intervention. Par exemple, un utilisateur peut saisir le texte d'une question qu'il souhaite poser, ou sélectionner un thème sur un écran de son terminal. A la réception d'une telle demande de mise en relation, le terminal du conférencier peut afficher la demande et le motif de la demande. Cette disposition permet au conférencier de prendre connaissance de la teneur de l'intervention avant de donner la parole, afin d'éviter par exemple que soit posé plusieurs fois la même question.

Selon une réalisation particulière, le procédé est tel qu'il comporte en outre, à la réception d'une demande de mise en relation, une étape d'émission d'un accusé de réception comprenant au moins un numéro d'ordre correspondant à une position de la demande dans une file de demandes reçues.

Lorsque plusieurs demande de mise en relation sont reçues, celles-ci sont mises dans une file d'attente. La position dans la file d'attente est alors communiquée au participant de façon à le renseigner sur le délai pouvant s'écouler avant que la parole lui soit accordée. Le numéro d'ordre peut également déterminé selon une organisation thématique des demandes de mise en relation reçues, de façon à regrouper les interventions ayant un lien entre elles.

Selon un autre aspect, l'invention concerne un dispositif de gestion d'une prise de parole, entre un premier terminal mobile et un second terminal, selon la revendication 7, les premiers et seconds terminaux étant inclus dans un ensemble de terminaux interconnectés au travers d'un premier réseau de communication, le dispositif étant particulier en ce qu'il comprend :
- une interface de communication adaptée pour recevoir et valider une demande de validation d'une demande de mise en relation émise par le premier terminal,
- une unité de configuration adaptée pour configurer, pour chacun des terminaux exceptés les premiers et seconds terminaux, une première restriction de communication appliquée aux connexions empruntant le premier réseau de communication,
- une unité de gestion d'appels, adaptée pour établir une communication entre le premier et le second terminal, et pour détecter la fin d'une communication, et
- l'unité de configuration étant en outre adaptée pour supprimer la restriction de communication pour l'ensemble des terminaux.

Selon une réalisation particulière, le dispositif de gestion est tel que l'unité de configuration est en outre adaptée pour configurer, pour chacun des terminaux exceptés les premiers et seconds terminaux, une seconde limite de débit appliquée aux connexions établies vers des services disponibles sur un second réseau accessible via un équipement d'accès connecté au premier réseau.

Selon un mode de réalisation particulier, le dispositif de gestion est tel qu'il comporte en outre :
- un processeur configuré pour associer une demande de mise en relation reçue avec un élément affiché sur un dispositif de présentation,
- une mémoire pour mémoriser l'association.

L'invention concerne également un serveur de gestion d'une prise de parole tel qu'il comporte un dispositif de gestion tel que décrit précédemment.

L'invention concerne aussi un terminal de gestion d'une prise de parole comportant un dispositif tel que décrit précédemment.

Les dispositifs, serveurs et terminaux présentent des avantages analogues à ceux du procédé précédemment présenté.

Dans un mode particulier de réalisation, les différentes étapes du procédé selon l'invention sont déterminées par des instructions de programmes d'ordinateurs.

En conséquence, l'invention vise aussi un programme d'ordinateur comportant des instructions adaptées à la mise en œuvre des étapes d'un procédé tel que décrit ci-dessus, lorsque le programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi support d'enregistrement lisible par un ordinateur sur lequel est enregistré un programme d'ordinateur comprenant des instructions pour l'exécution des étapes du procédé.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, une mémoire flash, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Les revendications dépendantes représentent divers modes de réalisation.

### Liste des figures

D'autres caractéristiques et avantages apparaîtront à la lecture de modes de réalisation préférés décrits en référence aux figures parmi lesquelles :
- La figure 1 illustre une architecture adaptée pour la mise en œuvre de l'invention, selon un mode de réalisation particulier,
- La figure 2 illustre les principales étapes du procédé de gestion selon une réalisation particulière de l'invention,
- La figure 3 illustre un exemple d'affichage de demandes de mise en relation reçues, selon un mode de réalisation particulier de l'invention.
- La figure 4 représente l'architecture d'un dispositif selon un mode particulier de réalisation de l'invention.

### Description détaillée

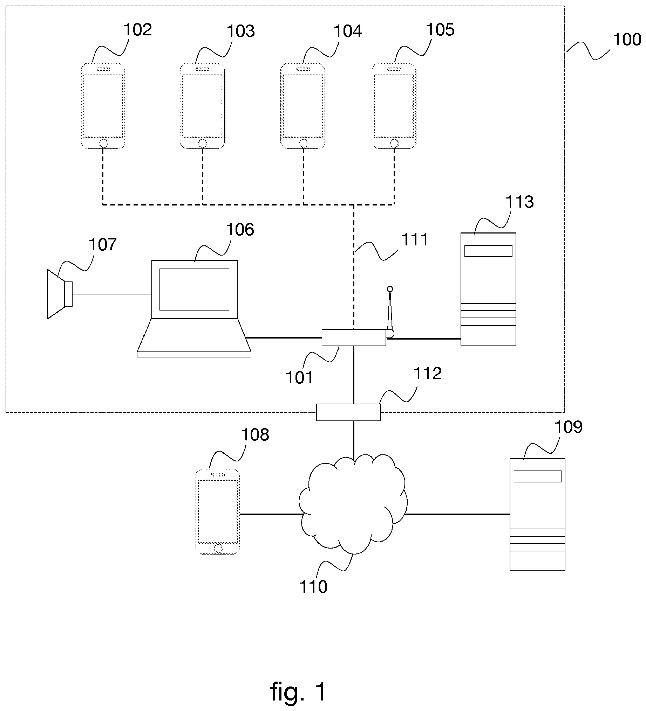

La **figure 1** illustre une architecture adaptée pour la mise en œuvre de l'invention. La figure représente un réseau de communication 100 installé par exemple dans une salle de conférence. Le réseau de communication est par exemple un réseau local de type Ethernet. Le réseau local 100 comprend un point d'accès 101 par l'intermédiaire duquel une pluralité de terminaux notés 102 à 106 peuvent se connecter au réseau et communiquer avec différents services disponibles sur ce réseau. De préférence, le point d'accès 101 est un point d'accès sans fil, par exemple un point d'accès Wifi, et permet aux terminaux d'accéder à un serveur 113 également connecté au réseau. Ainsi, les terminaux 102 à 106 peuvent échanger des données entre eux et télécharger des données depuis le serveur 113. Dans cet exemple, les terminaux 102 à 105 sont des smartphones appartenant à des personnes participants à une conférence et sont connectés au réseau 100 par l'intermédiaire d'une connexion sans fil 111, par exemple de type Wifi. Le terminal 106 correspond à un ordinateur disponible pour le conférencier. Cet ordinateur est de préférence connecté à un système de sonorisation 107 de la salle. Il s'agit par exemple d'un ordinateur intégré à un pupitre permettant à un conférencier de présenter des documents sur un écran et de diffuser des documents sonores via le système de sonorisation de la salle. Les terminaux 102 à 106 présentés dans cet exemple sont en outre adaptés pour établir des communications vocales, en utilisant le réseau local 100, selon un protocole de voix sur IP (VoIP), tel que SIP, H.323 ou encore MGCP. Ainsi, une communication vocale peut être établie entre un terminal d'un participant, par exemple le terminal 103, et l'ordinateur du conférencier 106. L'ordinateur du conférencier étant relié au système de sonorisation 107, les paroles prononcées par l'utilisateur du terminal 103 peuvent alors être restituées dans la salle, Un tel système peut être utilisé pour donner la parole à un participant pendant une conférence.

Bien entendu, la **figure 1** et le présent exemple sont donnés à titre purement indicatifs et ne constituent pas la seule mise en œuvre possible de l'invention. Par exemple, les terminaux peuvent être plus ou moins nombreux, de types différents ou encore utiliser des protocoles de communication différents. Par exemple, les terminaux peuvent être des smartphones, des tablettes, des ordinateurs portables ou tout autre dispositif adapté pour établir des communications vocales sur un réseau local. Cet exemple est décrit relativement à une communication vocale, mais l'invention s'applique de la même manière à une communication audiovisuelle.

La **figure 1** représente en outre un équipement d'accès 112 permettant aux terminaux du réseau local 100 d'accéder à des services disponibles sur un second réseau 110, comme par exemple au réseau Internet. L'équipement d'accès peut correspondre par exemple à un modem ADSL (Asymétrie Digital Subscriber Line), un routeur ou tout autre équipement permettant l'accès des terminaux au second réseau. Ainsi, les terminaux 102 à 106 peuvent accéder par exemple au serveur 109 au travers du réseau local 100 et du réseau Internet 110.

La **figure 1** représente aussi un terminal 108 connecté au réseau internet 110. Ce terminal peut être un ordinateur personnel, un smartphone ou encore une tablette appartenant à un utilisateur qui assiste à la conférence à distance, lorsqu'elle est retransmise en temps réel sur un site internet par exemple. Le terminal 108 est adapté pour établir avec l'ordinateur 106 des communications VoIP empruntant les réseaux 110 et 100. Ainsi, un utilisateur qui assiste à la conférence à distance peut intervenir de la même façon que les personnes présentent physiquement dans la salle.

Lorsque les terminaux 102 à 106 accèdent aux services offerts par les serveurs 113 et 109, ils occasionnent du trafic sur le réseau 100. En particulier, ce trafic peut provoquer des congestions au niveau des équipements 101 et 112. De telles congestions peuvent être préjudiciables à la qualité des communications établies entre les terminaux 102 à 105 et 108, et l'ordinateur 106 du conférencier. Un des buts de l'invention est d'éviter une telle dégradation de la qualité des communications.

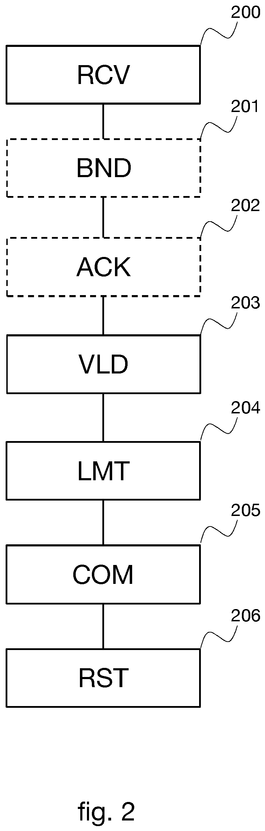

La **figure 2** illustre sous la forme d'un diagramme les principales étapes du procédé de gestion de la qualité d'une communication selon un mode particulier de réalisation de l'invention. Dans ce mode de réalisation, l'invention est mise en œuvre par l'ordinateur 106 de la **figure 1****.** Toutefois, l'invention peut aussi être mise en œuvre par un autre équipement du réseau, comme par exemple par le point d'accès 101 ou un autre serveur connecté au réseau.

Lors d'une première étape 200, une demande de mise en relation est reçue. Cette demande de mise en relation est émise par un terminal de l'assistance, par exemple par le terminal 103. L'émission d'une telle demande par le terminal 103 est déclenchée suite à une action de l'utilisateur du terminal lorsque celui-ci souhaite prendre la parole. Par exemple, lorsque l'utilisateur du terminal 103 veut réagir ou poser une question suite à des propos du conférencier, il peut toucher un bouton prévu à cet effet sur une interface du terminal 103, l'action sur ce bouton provoquant l'émission d'une demande de mise en relation à destination de l'ordinateur 106 mettant en œuvre l'invention. Selon un mode particulier de réalisation, une telle demande de mise en relation est réalisée par l'émission d'un message de signalisation comportant au moins un identifiant du terminal. Cet identifiant peut être utilisé par le terminal 106 pour établir une communication vocale ou audiovisuelle. Selon une réalisation particulière, ce message de signalisation comporte en outre un motif pour la mise en relation. Par exemple, le message peut comprendre un champ comportant un texte saisi par l'utilisateur, le texte explicitant l'objet de la demande de mise en relation. Selon un autre mode de réalisation particulier, le motif tel que transporté dans le message de signalisation peut être un index se rapportant à une liste de motifs connue à la fois du terminal 103 et du terminal 106. Selon un mode de réalisation particulier, le message de demande de mise en relation est un message de type SIP (Session Initiation Protocol) INFO ou OPTIONS, ou encore une requête HTTP. Selon un mode particulier de réalisation, la demande de mise en relation comporte un identifiant d'appel du terminal ayant émis la demande. Cet identifiant d'appel permet d'établir une communication vocale ou audiovisuelle avec le terminal lorsque la demande de mise en relation est acceptée. Selon une réalisation particulière de l'invention, le message de demande de mise en relation comprend au moins une donnée de localisation. Cette donnée de localisation peut correspondre par exemple à un numéro de place dans une salle de conférence, ou encore à des coordonnées GPS (global Positioning System) du terminal. De telles coordonnées GPS peuvent être obtenues par le terminal lorsqu'il est équipé d'un module GPS. Lorsque l'indication correspond à un numéro de place dans une salle, celui-ci peut être saisi par l'utilisateur du terminal au travers d'une interface prévue à cet effet sur le terminal, ou encore obtenue par l'intermédiaire d'un code scanné, comme par exemple un QR-Code ou un dispositif d'identification RFID (Radio Frequency Identification) associé à l'emplacement de l'utilisateur dans la salle. Une telle information de localisation dans la salle peut également être obtenue par l'intermédiaire d'un dispositif d'éclairage mettant en œuvre une technologie VLC Visible Light Communication), comme par exemple un système d'éclairage LiFI (Light Fidelity).

Selon un mode particulier de réalisation, une demande de mise en relation reçue à l'étape 200 peut être mise en correspondance avec un élément affiché sur un dispositif de présentation lors d'une étape 201. Par exemple, lorsqu'une demande de mise en relation est reçue alors qu'un document est projeté sur un écran grâce à un vidéoprojecteur, le procédé selon l'invention permet d'associer le contenu affiché avec la demande de mise en relation et de mémoriser cette association. De cette façon, le contexte de la demande est mémorisé et le conférencier peut savoir à quelle partie d'un exposé se rapporte une question que souhaite poser un participant. Pour cela, un dispositif mettant en œuvre le procédé selon l'invention, comme par exemple le terminal 106, peut établir une connexion avec un logiciel ou un dispositif utilisé pour la présentation du document afin d'obtenir un identifiant du document affiché. L'identifiant du document correspond par exemple au titre du document ou à un nom de fichier, éventuellement complété d'un titre ou d'une page en cours d'affichage au moment de la réception de la demande de mise en relation. La connexion établie avec le logiciel ou le dispositif de présentation peut être une connexion locale, réalisée au moyen d'une API (Application Programming Interface), ou une connexion distance, par l'intermédiaire d'un protocole réseau adapté, par exemple un protocole de type http.

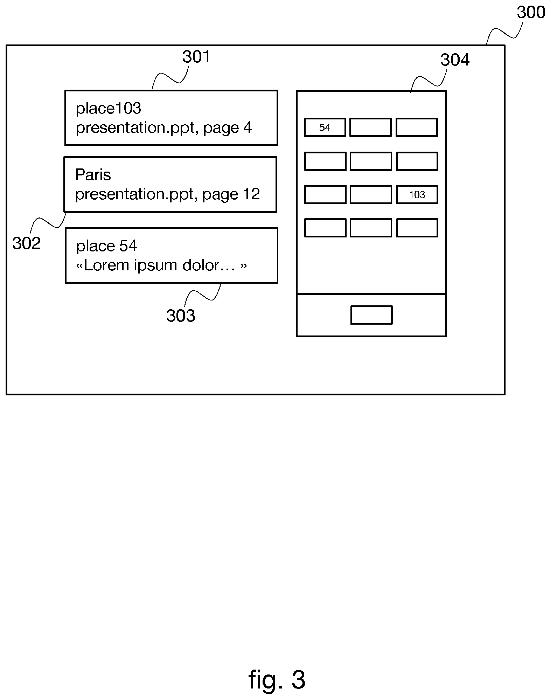

A ce stade, les demandes de mise en relation reçues peuvent être affichées sous forme de liste sur un écran du terminal 106. La **figure 3** illustre un exemple d'affichage 300 des demandes de mise en relation 301, 302 et 303 reçues, selon un mode de réalisation particulier de l'invention. Par exemple, une demande de mise en relation peut être représentée par le cadre 301 sur un écran de l'ordinateur 106. Une telle représentation comprend en particulier un numéro de place correspondant à l'emplacement dans la salle de la personne ayant sollicité une intervention, le nom du fichier et la page affiché sur un dispositif de présentation au moment où la demande est reçue. La figure 3 illustre également un plan de la salle 304. Un tel plan permet de faire correspondre une donnée de localisation présente dans la demande de mise en relation avec un emplacement dans la salle. De cette façon, un conférencier peut facilement localiser dans la salle une personne à qui il donne la parole. Un tel plan peut être connu du terminal grâce à une configuration préalable et permettre l'orientation d'un spot ou d'une caméra

Le procédé selon l'invention peut en outre comporter, dans une réalisation particulière, une étape 202 d'envoi d'un accusé de réception de la demande de mise en relation. Un tel accusé de réception peut en particulier comprendre un numéro d'ordre correspondant à un rang dans la liste des demandes de mise en relation reçues. De cette façon, un participant à la conférence peut connaître le nombre de personnes qui prendront la parole avant lui. Une telle information peut être transmise dans une réponse au message de demande de mise en relation. Par exemple, lorsque la demande de mise en relation est transmise au moyen d'un message SIP OPTIONS ou d'une requête HTTP, cette information est transmise dans la réponse 200 OK à ce message ou cette requête.

Selon une réalisation particulière, à la réception d'une demande de mise en relation, une indication selon laquelle une demande de mise en relation a été reçue, éventuellement accompagnée d'un motif, est transmise a au moins un autre terminal de l'assemblée. Ainsi, les participants à la conférence sont informés des questions qui vont être posées. Le procédé permet ainsi d'éviter que des utilisateurs effectuent des demandes de mises en relation pour intervenir sur un même motif ou poser une même question. Selon une réalisation particulière, les demandes de prise de parole reçues sont regroupées par thème, en utilisant par exemple des mots clefs du motif afin de déterminer un ordre de passage des interventions.

À l'étape 203, la demande de mise en relation est validée par l'utilisateur du terminal 106. Par exemple, le conférencier peut valider la demande de mise en relation lorsqu'il souhaite donner la parole à une personne en ayant fait la demande. Pour cela, le conférencier peut sélectionner une demande par l'intermédiaire d'une interface utilisateur affichée sur un écran du terminal 106, par exemple au travers d'une interface telle que celle décrite en relation avec la figure 3.

Afin de garantir la qualité d'une telle intervention, le procédé met en œuvre à l'étape 204 une limitation du débit disponible pour chacun des autres terminaux présents dans la salle. Pour cela, l'ordinateur 106 configure pour chacun des terminaux, exceptés les terminaux utilisés pour la mise en relation, c'est-à-dire pour les terminaux 103 et 106 dans cet exemple, une restriction de communication pour les connexions empruntant le réseau local de la salle de conférence. Une telle configuration peut être réalisée de différentes manière. Par exemple, selon un premier mode particulier de réalisation, l'équipement mettant en œuvre le procédé émet un message à destination d'un équipement de routage adapté pour appliquer des règles de régulation de trafic sur le réseau, comme par exemple le point d'accès 101. De préférence, cet équipement de routage est configuré en tant que passerelle par défaut sur les terminaux de l'assistance. La passerelle par défaut peut être définie sur les terminaux lors de l'attribution de l'adresse IP du terminal par un service DHCP (Dynamic Host Configuration Protocol) du réseau local. Le message de configuration comporte, pour un terminal, au moins un identifiant du terminal, tel que par exemple une adresse IP (Internet Protocol), une adresse MAC (Media Access Control), un identifiant d'appel ou tout autre identifiant adapté. Le message de configuration peut en outre comporter un paramètre de restriction correspondant par exemple à un débit maximum autorisé pour accéder à un réseau ou à un service donné. Ainsi, les connexions des terminaux identifiés dans le message de configuration seront limitées en débit lorsqu'ils accèdent à un service ou à un réseau particulier. De cette façon, le procédé permet de garantir la disponibilité des ressources qui sont nécessaires à la communication lors de l'intervention du participant. Par exemple, lorsqu'une communication est établie entre le terminal 103 et l'ordinateur 106, le débit des autres terminaux 102, 104 et 105 est limité par l'équipement de routage 101 lorsqu'ils accèdent au serveur 113.

Selon une autre réalisation, la configuration de la restriction est réalisée par un message de configuration envoyé à destination des terminaux. Un tel message comprend par exemple un débit maximum autorisé pour les connexions à un service ou un réseau particulier. Les terminaux sont alors responsables d'appliquer la restriction.

Selon un mode particulier de réalisation, la restriction de communication configurée pour un terminal dépend du réseau vers lequel le terminal établit des connexions. Par exemple, le procédé propose de configurer, pour chacun des terminaux exceptés les terminaux 103 et 106 entre lesquels une communication est établie, une seconde restriction de communication appliquée aux connexions émanant de ces terminaux vers des services disponibles sur un second réseau, comme par exemple vers le réseau internet 110 accessible via l'équipement d'accès 112 connecté au réseau local 100. Ainsi, la restriction imposée n'est pas la même selon qu'un terminal accède à un service proposé par le serveur 113 ou un service proposé par le serveur 109. Cette disposition permet d'adapter la restriction aux capacités des réseaux sollicités. En particulier, elle présente l'avantage de garantir au terminal 108 localisé à l'extérieur de la salle de conférence, la disponibilité des ressources nécessaires au point d'accès 112 pour entrer en relation avec l'ordinateur 106.

Selon un mode de réalisation particulier, le procédé selon l'invention propose d'émettre, à destination du terminal correspondant à la demande de mise en relation validée, un message permettant d'obtenir les capacités de communication du terminal. Par exemple, un message de type SIP OPTIONS peut être envoyé de manière à recevoir en réponse l'ensemble des codecs audio et/ou vidéo supportés par le terminal ainsi que les différents profils de codage supportés. La différence entre le débit maximum offert par le réseau local et le débit maximum susceptible d'être utilisé par le terminal lors d'une communication, permet de déterminer le débit disponible pour les autres terminaux lorsque le terminal est en communication. Ainsi, en divisant par exemple ce débit disponible par le nombre de terminaux présents dans la salle, il est possible de déterminer la limitation de débit à imposer à chacun des terminaux.

Selon une réalisation particulière de l'invention, lors de l'étape 205 un message d'établissement d'appel selon un protocole de Voix sur IP est émis à destination du terminal correspondant à la demande de mise en relation validée à l'étape 203. Selon une réalisation particulière, la validation provoque l'émission d'un message SIP INVITE vers le terminal qui a envoyé la demande de mise en relation. Un tel message permet par exemple d'établir une communication entre le terminal 103 et l'ordinateur 106 de façon à permettre à l'utilisateur du terminal 103 d'intervenir dans la conférence. L'ordinateur 106 étant connecté au système de sonorisation de la salle, les autres participants peuvent entendre l'intervention.

Selon un mode de réalisation particulier, si le document présenté lors de la conférence a été associé à une demande de mise en relation à l'étape 201, le procédé selon l'invention propose d'afficher automatiquement le document associé lorsque la demande de mise en relation correspondante est validée. Ainsi, le procédé permet de rétablir le contexte tel qu'il était au moment où le participant à sollicité une prise de parole et évite au conférencier de devoir naviguer dans les documents présentés pour afficher de nouveau le document associé à une question posée. Pour cela, un dispositif mettant en œuvre l'invention peut consulter une base de données dans laquelle a été mémorisée l'association afin d'obtenir par exemple le nom du fichier et son emplacement sur en dispositif de stockage, et exécuter une commande d'ouverture dudit fichier.

Lorsque l'intervention est terminée, la communication est déconnectée et, à l'étape 206, un nouveau message de configuration est émis de façon à rétablir les capacités de communication des terminaux pour lesquels une restriction avait été appliquée à l'étape 204. Le message de configuration est semblable par sa forme et par l'équipement vers lequel il est émis au message de configuration émis à l'étape 204.

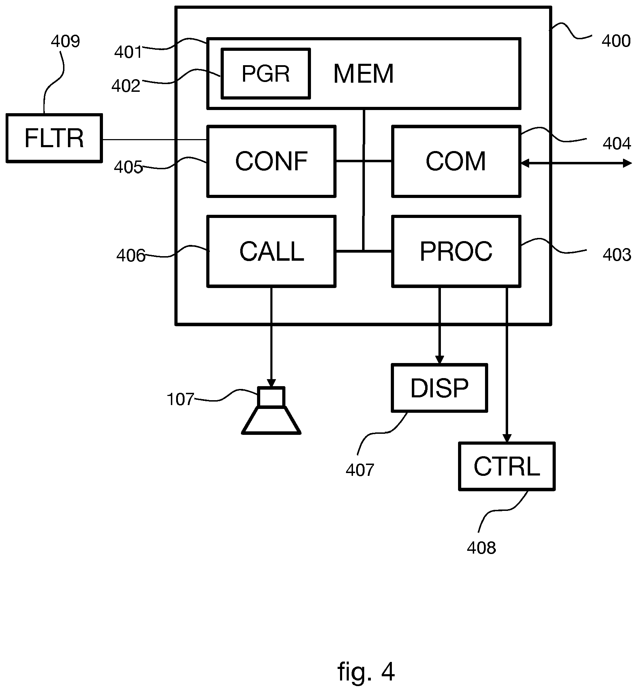

La **figure 4** illustre, selon un mode particulier de réalisation de l'invention, un dispositif 400 mettant en œuvre le procédé de gestion d'une prise de paroleentre un premier terminal mobile et un second terminal, les premiers et seconds terminaux étant inclus dans un ensemble de terminaux interconnectés au travers d'un premier réseau de communication.

Le dispositif comprend un espace de stockage 401, par exemple une mémoire MEM, une unité de traitement 403 équipée par exemple d'un processeur PROC. L'unité de traitement peut être pilotée par un programme 402, par exemple un programme d'ordinateur PGR, mettant en œuvre le procédé de demande de qualification d'alerte tel que décrit dans l'invention en référence à la **figure 4**, et notamment les étapes de réception et de validation d'une demande de mise en relation émise par le premier terminal, de configuration, pour chacun des terminaux exceptés les premiers et seconds terminaux, d'une première restriction de communication pour les connexions empruntant le premier réseau de communication, d'établissement d'une communication entre le premier et le second terminal, et à la détection de la fin de la communication, de suppression de la restriction de communication pour l'ensemble des terminaux.

À l'initialisation, les instructions du programme d'ordinateur 402 sont par exemple chargées dans une mémoire RAM (Random Access Memory en anglais) avant d'être exécutées par le processeur de l'unité de traitement 403. Le processeur de l'unité de traitement 403 met en œuvre les étapes du procédé de gestion d'une prise de parole entre un premier terminal mobile et un second terminal selon les instructions du programme d'ordinateur 402.

Pour cela, le dispositif comprend, outre la mémoire 401, des moyens de communication 404 (COM) permettant au dispositif de se connecter à un réseau de télécommunication et d'échanger des données avec d'autres dispositifs par l'intermédiaire du réseau de télécommunications, et en particulier de recevoir une demande de mise en relation en provenance du premier terminal. Par exemple, le module de communication peut être une interface réseau Wifi ou Ethernet, ou encore un module de communication Bluetooth.

Selon une réalisation particulière, le dispositif comprend en outre une unité de configuration 405 (CONF). Cette unité de configuration permet notamment de commander la mise en place de restriction de communication pour les connexions empruntant un réseau de communication particulier. Cette unité peut comprendre, selon un mode de réalisation particulier, un processeur adapté pour déterminer le débit minimum nécessaire à l'établissement d'une communication de bonne qualité avec un terminal et une interface réseau adaptée pour émettre un message comportant des paramètres de configurations à destination d'un équipement 409 (FLTR) adapté pour réguler le trafic selon des règles de gestion. Selon une réalisation particulière de l'invention, le composant de régulation du trafic 409 est intégré au dispositif. Les règles de gestion permettent d'appliquer des restrictions de trafic pour un terminal particulier lorsqu'il établit des connexions à destination d'un réseau ou d'un service particulier. Un tel composant de régulation de trafic peut être implémenté à partir de briques logicielles telles que les logiciels Open source IpTables et Netfilter. Une telle unité de configuration peut être mise en œuvre par un programme d'ordinateur exécuté par un processeur, ou bien par un composant électronique intégré comprenant un circuit adapté pour piloter un dispositif de régulation de trafic. Selon une réalisation particulière, l'unité de configuration est adaptée pour émettre, à destination d'au moins un terminal, un message comprenant au moins une restriction de communication pour ce au moins un terminal lorsqu'il communique avec un réseau ou un service particulier. Le module de configuration est en outre adapté pour commander la suppression d'une restriction de communication lorsqu'une communication avec un terminal est terminée.

Le dispositif comprend également selon une réalisation particulière, une unité de gestion d'appels 406 (CALL), adaptée pour établir une communication vocale ou audiovisuelle avec un terminal. Par exemple, une telle unité peut être mise en œuvre à partir d'un processeur exécutant un programme de gestion d'appel selon un protocole de Voix sur IP tel que SIP ou H.323 par exemple. Le module de gestion d'appel est connecté à un système de sonorisation (107) et comprend au moins un décodeur audio adapté pour décoder un flux audio en provenance d'un terminal ainsi qu'une interface audio adaptée pour restituer vers le système de sonorisation un signal analogique à partir du signal numérique décodé. La connexion entre le dispositif 400 et le système de sonorisation 107 peut être directe ou réalisée au moyen d'une connexion sans fil de type Bluetooth par exemple, ou par une connexion réseau lorsque le dispositif est mis en œuvre sur un serveur.

Selon un mode de réalisation particulier, le dispositif comprend un processeur configuré pour associer une demande de mise en relation reçue avec un élément affiché sur un dispositif de présentation, et une mémoire pour mémoriser cette association. Pour cela, le processeur exécute par exemple des instructions adaptées pour obtenir, à partir du message de demande de mise en relation reçu, un identifiant de ladite demande de mise en relation. Le processeur exécute d'autre part des instructions adaptées pour obtenir au moins un identifiant d'un document en cours de présentation sur un dispositif d'affichage associé au dispositif, en utilisant par exemple des APIs d'un système d'exploitation du dispositif d'affichage. Le processeur exécute ensuite des instructions adaptées pour provoquer la mémorisation de l'identifiant de la demande de mise en relation en association avec le au moins un identifiant d'un document en cours de présentation, cette mémorisation pouvant par exemple être réalisée dans une base de données relationnelle.

Selon un mode particulier de réalisation, le dispositif 400 est connecté à un dispositif d'affichage 407 (DISP), tel qu'un écran ou un projecteur vidéo. Ainsi, le dispositif peut afficher une liste des demandes de mise en relation reçues. Pour cela, le dispositif peut mettre en œuvre un processeur configuré pour exécuter des instructions permettant de lire des demandes de mise en relation mémorisées dans la mémoire MEM, et de transmettre des données représentatives de ces demandes de mise en relation à un système de gestion d'interface utilisateurs pour affichage sur le dispositif 407.

Selon un mode particulier de réalisation, le dispositif peut être intégré à un terminal de type ordinateur personnel connecté à un système de sonorisation, à un pupitre d'une salle de conférence, ou encore à un serveur distant adapté pour gérer des demandes de mise en relation dans une pluralité de salles de conférence.

## Revendications

1. Procédé de gestion d'une prise de parole, entre un premier terminal mobile et un second terminal, les premiers et seconds terminaux étant inclus dans un ensemble de terminaux interconnectés au travers d'un premier réseau de communication,
le procédé étant exécuté par un dispositif,
le procédé étant **caractérisé en ce qu'**il comporte, suite à la réception (200) et à la validation (203) sur le second terminal d'une demande de mise en relation émise par le premier terminal, les étapes suivantes :
- configuration (204), pour chacun des terminaux de l'ensemble exceptés les premiers et seconds terminaux, d'une première restriction de communication pour les connexions empruntant le premier réseau de communication,
- établissement (205) d'une communication entre le premier et le second terminal, et
à la détection de la fin de la communication :
- suppression (206) de la restriction de communication pour l'ensemble des terminaux.

2. Procédé selon la revendication 1 tel qu'il comporte en outre une étape de configuration, pour chacun des terminaux de l'ensemble exceptés les premiers et seconds terminaux, d'une seconde restriction de communication appliquée aux connexions établies vers des services disponibles sur un second réseau accessible via un équipement d'accès connecté au premier réseau.

3. Procédé selon l'une quelconque des revendications précédentes tel qu'il comporte en outre, à la réception d'une demande de mise en relation en provenance du premier terminal, une étape d'association de la demande avec un élément affiché sur un dispositif de présentation.

4. Procédé selon l'une quelconque des revendications précédentes tel que la demande de mise en relation comprend au moins une donnée de localisation du premier terminal.

5. Procédé selon l'une quelconque des revendications précédentes tel que la demande de mise en relation comprend au moins un motif de la demande.

6. Procédé selon l'une quelconque des revendications précédentes tel qu'il comporte en outre, à la réception d'une demande de mise en relation, une étape d'émission d'un accusé de réception comprenant au moins un numéro d'ordre correspondant à une position de la demande dans une file de demandes reçues.

7. Dispositif de gestion d'une prise de parole, entre un premier terminal mobile et un second terminal, les premiers et seconds terminaux étant inclus dans un ensemble de terminaux interconnectés au travers d'un premier réseau de communication, le dispositif étant **caractérisé en ce qu'**il comprend
- une interface de communication adaptée pour recevoir et valider une demande de validation d'une demande de mise en relation émise par le premier terminal,
- une unité de configuration adaptée pour configurer, pour chacun des terminaux de l'ensemble exceptés les premiers et seconds terminaux, une première restriction de communication appliquée aux connexions empruntant le premier réseau de communication, et
- une unité de gestion d'appels, adaptée pour établir une communication entre le premier et le second terminal, et pour détecter la fin d'une communication, et
**en ce que** l'unité de configuration est en outre adaptée pour supprimer la restriction de communication pour l'ensemble des terminaux.

8. Dispositif selon la revendication 7 tel que l'unité de configuration est en outre adaptée pour configurer, pour chacun des terminaux de l'ensemble exceptés les premiers et seconds terminaux, une seconde restriction de communication appliquée aux connexions établies vers des services disponibles sur un second réseau accessible via un équipement d'accès connecté au premier réseau.

9. Dispositif selon l'une quelconque des revendications 7 ou 8 tel qu'il comporte en outre :
- un processeur configuré pour associer une demande de mise en relation reçue avec un élément affiché sur un dispositif de présentation,
- une mémoire pour mémoriser l'association.

10. Serveur de gestion de la qualité d'une communication tel qu'il comporte un dispositif selon l'une des revendications 7 à 9.

11. Terminal de gestion de la qualité d'une communication tel qu'il comporte un dispositif selon l'une des revendications 7 à 9.

12. Programme d'ordinateur comportant des instructions adaptées pour l'exécution du procédé de gestion selon l'une quelconque des revendications 1 à 6, lorsque le programme est exécuté par un processeur.

13. Support d'enregistrement lisible par un ordinateur sur lequel est enregistré un programme d'ordinateur comprenant des instructions adaptées pour l'exécution des étapes du procédé de gestion selon l'une des revendications 1 à 6.

## Patentansprüche

1. Verfahren zur Verwaltung einer Sprechreihenfolge zwischen einem ersten mobilen Endgerät und einem zweiten mobilen Endgerät, wobei das erste und zweite Endgerät in einer Gruppe von Endgeräten aufgewiesen ist, die über ein erstes Kommunikationsnetz aneinander angeschlossen sind,
wobei das Verfahren durch eine Vorrichtung ausgeführt ist, wobei das Verfahren **dadurch gekennzeichnet ist, dass** es im Anschluss an den Empfang (200) und an die Bestätigung (203) auf dem zweiten Endgerät einer Verbindungsaufbau-Anfrage, die vom ersten Endgerät ausgegeben ist, die folgenden Schritte umfasst:
- Gestaltung (204) einer ersten Kommunikationseinschränkung für die Verbindungen, die das erste Kommunikationsnetz nutzen, für jedes der Endgeräte der Gruppe ausgenommen des ersten und zweiten Endgeräts,
- Aufbau (205) einer Kommunikation zwischen dem ersten und dem zweiten Endgerät und Feststellung des Endes der Kommunikation:
- Aufhebung (206) der Kommunikationseinschränkung für alle Endgeräte.

2. Verfahren nach Anspruch 1 derart, dass es ferner einen Gestaltungsschritt für jedes der Endgeräte der Gruppe ausgenommen des ersten und zweiten Endgeräts einer zweiten Kommunikationseinschränkung umfasst, die auf die Verbindungen angewendet wird, welche zu Diensten aufgebaut werden, die auf einem zweiten Netz verfügbar sind, das über eine an ein erstes Netz angeschlossene Zugriffsausrüstung zugänglich ist.

3. Verfahren nach irgendeinem der voranstehenden Ansprüche derart, dass es ferner beim Empfang einer Verbindungsaufbau-Anfrage aus einem ersten Endgerät einen Zuordnungsschritt der Anfrage mit einem auf einer Darstellungsvorrichtung angezeigten Element umfasst.

4. Verfahren nach irgendeinem der voranstehenden Ansprüche derart, dass die Verbindungsaufbau-Anfrage wenigstens eine Standortbestimmungs-Anfrage des ersten Endgeräts umfasst.

5. Verfahren nach irgendeinem der voranstehenden Ansprüche derart, dass die Verbindungsaufbau-Anfrage wenigstens einen Grund für die Anfrage umfasst.

6. Verfahren nach irgendeinem der voranstehenden Ansprüche derart, dass es ferner beim Empfang einer Verbindungsaufbau-Anfrage einen Ausgabeschritt einer Empfangsbestätigung umfasst, umfassend wenigstens eine Ordnungsnummer, die einer Position der Anfrage in einer Schlange von empfangenen Anfragen umfasst.

7. Vorrichtung zur Verwaltung einer Sprechreihenfolge zwischen einem ersten mobilen Endgerät und einem zweiten mobilen Endgerät, wobei das erste und zweite Endgerät in einer Gruppe von Endgeräten aufgewiesen ist, die über ein erstes Kommunikationsnetz aneinander angeschlossen sind,
wobei die Vorrichtung **dadurch gekennzeichnet ist, dass** sie
- eine Kommunikations-Schnittstelle umfasst, die geeignet ist, um eine Bestätigungsanfrage einer Verbindungsaufbau-Anfrage zu empfangen und zu bestätigen, die vom ersten Endgerät ausgegeben ist,
- eine Gestaltungseinheit, die für jedes der Endgeräte der Gruppe, ausgenommen des ersten und zweiten Endgeräts, zum Gestalten einer ersten Kommunikationseinschränkung geeignet ist, die auf die Verbindungen angewendet ist, welche das erste Kommunikationsnetz nutzen, und
- eine Ruf-Verwaltungseinheit, die zum Aufbauen einer Kommunikation zwischen dem ersten und zweiten Endgerät und zum Feststellen des Endes einer Kommunikation geeignet ist,
und dass die Gestaltungseinheit ferner geeignet ist, um die Kommunikationseinschränkung für die Gruppe der Endgeräte aufzuheben.

8. Vorrichtung nach Anspruch 7 derart, dass die Gestaltungseinheit ferner geeignet ist, um für jedes der Endgeräte der Gruppe, ausgenommen des ersten und zweiten Endgeräts, eine zweite Kommunikationseinschränkung zu gestalten, die auf die Verbindungen angewendet wird, welche mit den Diensten aufgebaut werden, die auf einem zweiten Netz verfügbar sind, das über eine an das erste Netz angeschlossene Zugriffsausrüstung zugänglich ist.

9. Vorrichtung nach irgendeinem der Ansprüche 7 oder 8 derart, dass sie ferner umfasst:
- einen Prozessor, der gestaltet ist, um eine empfangene Verbindungsaufbau-Anfrage einem Element zuzuordnen, das auf einer Darstellungsvorrichtung angezeigt ist,
- einen Speicher zum Speichern der Zuordnung.

10. Verwaltungsserver der Qualität einer Kommunikation derart, dass er eine Vorrichtung nach einem der Ansprüche 7 bis 9 umfasst.

11. Verwaltungsendgerät der Qualität einer Kommunikation derart, dass es eine Vorrichtung nach einem der Ansprüche 7 bis 9 umfasst.

12. Computerprogramm, umfassend Anweisungen, die für die Ausführung des Verwaltungsverfahrens nach irgendeinem der Ansprüche 1 bis 6 geeignet sind, wenn das Programm durch einen Prozessor ausgeführt ist.

13. Speichermedium, das von einem Computer lesbar ist, auf dem ein Computerprogramm gespeichert ist, umfassend Anweisungen, die für die Ausführung der Schritte des Verwaltungsverfahrens nach einem der Ansprüche 1 bis 6 geeignet sind.

## Claims

1. Method for managing speaking turns, between a first mobile terminal and a second terminal, the first and second terminals being included in a set of terminals interconnected through a first communication network, the method being executed by a device, the method being **characterised in that** it comprises, subsequent to the reception (200) and to the validation (203) on the second terminal of a linkup request sent by the first terminal, the following steps:
- configuration (204), for each of the terminals of the set except for the first and second terminals, of a first communication restriction for the connections following the first communication network,
- establishment (205) of a communication between the first and second terminal, and
upon detection of the end of the communication:
- removal (206) of the communication restriction for the whole set of terminals.

2. Method according to Claim 1, such that it furthermore comprises a step of configuring, for each of the terminals of the set except for the first and second terminals, a second communication restriction applied to the connections established towards services available on a second network accessible via an access equipment connected to the first network.

3. Method according to any one of the preceding claims, such that it furthermore comprises, upon receipt of a linkup request originating from the first terminal, a step of associating the request with an element displayed on a presentation device.

4. Method according to any one of the preceding claims, such that the linkup request comprises at least one item of location data for locating the first terminal.

5. Method according to any one of the preceding claims, such that the linkup request comprises at least one motive of the request.

6. Method according to any one of the preceding claims, such that it furthermore comprises, upon receipt of a linkup request, a step of sending an acknowledgement of receipt comprising at least one serial number corresponding to a position of the request in a queue of received requests.

7. Device for managing speaking turns, between a first mobile terminal and a second terminal, the first and second terminals being included in a set of terminals interconnected through a first communication network, the device being **characterised in that** it comprises;
- a communication interface adapted to receive and validate a request for validation of a linkup request sent by the first terminal,
- a configuration unit adapted to configure, for each of the terminals of the set except for the first and second terminals, a first communication restriction applied to the connections following the first communication network,
- a calls management unit, adapted to establish a communication between the first and second terminal, and to detect the end of a communication, and
**in that** the configuration unit is furthermore adapted to remove the communication restriction for the whole set of terminals.

8. Device according to Claim 7, such that the configuration unit is furthermore adapted to configure, for each of the terminals of the set except for the first and second terminals, a second communication restriction applied to the connections established towards services available on a second network accessible via an access equipment connected to the first network.

9. Device according to either one of Claims 7 or 8, such that it furthermore comprises:
- a processor configured to associate a linkup request received with an element displayed on a presentation device,
- a memory for storing the association.

10. Server for managing the quality of a communication, such that it comprises a device according to one of Claims 7 to 9.

11. Terminal for managing the quality of a communication, such that it comprises a device according to one of Claims 7 to 9.

12. Computer program comprising instructions adapted for the execution of the management method according to any one of Claims 1 to 6, when the program is executed by a processor.

13. Recording medium readable by a computer on which is recorded a computer program comprising instructions adapted for the execution of the steps of the management method according to one of Claims 1 to 6.
